(19) **Europäisches Patentamt / European Patent Office / Office européen des brevets**

(11) **EP 1 703 154 B1**

(12) **EUROPEAN PATENT SPECIFICATION**

(45) Date of publication and mention
of the grant of the patent:
**18.02.2009 Bulletin 2009/08**

(51) Int Cl.:
**F16C 33/66** (2006.01)

(21) Application number: **06004872.5**

(22) Date of filing: **09.03.2006**

(54) **Rolling bearing for automotive accessory having capability to prevent brittle flaking**

Wälzlager für Hilfsaggregate von Kraftfahrzeugen mit der Fähigkeit Abblättern durch Verspröden zu verhindern

Roulement pour accessoires d'automobiles pouvant éviter un écaillage fragile

(84) Designated Contracting States:
**DE FR SE**

(30) Priority: **17.03.2005 JP 2005076557**

(43) Date of publication of application:
**20.09.2006 Bulletin 2006/38**

(73) Proprietor: **DENSO CORPORATION**
**Kariya-city,**
**Aichi-pref. 448-8661 (JP)**

(72) Inventors:
  • **Umeda, Atsushi**
  **c/o Denso Corporation**
  **Kariya-city**
  **Aichi-pref., 448-8661 (JP)**
  • **Shiga, Tsutomu**
  **c/o Denso Corporation**
  **Kariya-city**
  **Aichi-pref., 448-8661 (JP)**
  • **Ihata, Kouichi**
  **c/o Denso Corporation**
  **Kariya-city**
  **Aichi-pref., 448-8661 (JP)**

(74) Representative: **Kuhnen & Wacker**
**Patent- und Rechtsanwaltsbüro**
**Prinz-Ludwig-Strasse 40A**
**85354 Freising (DE)**

(56) References cited:
JP-A- 63 147 756          US-A1- 2002 159 662
US-B2- 6 605 574

**Description**

BACKGROUND OF THE INVENTION

1 Technical Field of the Invention

The present invention relates generally to bearings and automotive accessories. More particularly, the invention relates to a rolling bearing for use in an automotive accessory, which has a capability to prevent the surfaces of rolling elements and the raceway surfaces of inner and outer rings thereof from brittle flaking.

2 Description of the Related Art

In recent years, rolling bearings of automotive accessories, such as an alternator and an air conditioning compressor driven by an engine in an automobile, have come to be used under severe operating conditions (for example, high temperature and vibration), resulting in a new type of bearing damage, called "brittle flaking".

Brittle flaking may occur at any area of the surfaces of the rolling elements and the raceway surfaces of the inner and outer rings of the rolling bearing. Further, a characteristic of brittle flaking is that the time period from the start to finish thereof is very short, for example, only about 0.1 to 1 % of that of a general rolling contact fatigue.

Up to now, the mechanism of brittle flaking has been not made clear. Accordingly, only temporary expedients that are not based on sound scientific grounds have been employed to solve the problem of brittle flaking, in other words, no fundamental solution to the problem has been provided.

According to the results of a rolling bearing reliability test, among the accessories of an automobile, occurrence rate of brittle flaking was highest in the alternator. As is well known in the art, the alternator had the highest speed increasing ratio with respect to the engine and a large rotational inertia, and thus had the largest equivalent inertia which is proportional to the second power of the speed increasing ratio. Further, occurrence rate of brittle flaking was high in the accessories when those were driven by the engine via a Poly-V belt, with which the belt tension was set tight as is well known in the art. Furthermore, occurrence rate of brittle flaking was high in the accessories when there was provided an autotensioner in the belt drive system to prevent slack of the belt via which the engine drove the accessories.

One theory explains, based on the fact that the hydrogen content in grease included in rolling bearings damaged due to brittle flaking is high, the mechanism of brittle flaking such that the hydrogen generated due to decomposition of the grease diffuses into the rolling elements and the outer ring, thereby causing the surfaces thereof to flake. (With regard to the theory, a further reference can be made to: K. Tamada and H. Tanaka, Wear 199 (1996) 245-252, "Occurrence of Brittle Flaking on Bearings Used for Automotive Electrical Instruments and Auxiliary Devices")

Further, according to the theory, a new type of grease has been developed which includes an additive to form electrical insulation films on raceway surfaces of rolling bearings, thereby preventing brittle flaking from occurring. By means of the new grease, a certain decrease in occurrence rate of brittle flaking has been achieved; however, it is still impossible to completely prevent occurrence of brittle flaking only by the help of the grease. In deed, in some cases, brittle flaking occurred even with the insulation films formed on the raceway surfaces of the rolling bearings. Moreover, on the surfaces damaged by brittle flaking, the evidence of a plastic deformation was found.

Accordingly, though grease does have influence on occurrence of brittle flaking, it may not be effective to solve the problem of brittle flaking by developing a newer type of grease aiming to form insulation films on raceway surfaces of rolling bearings.

SUMMARY OF THE INVENTION

The present invention has been made in view of the above-mentioned circumstances.

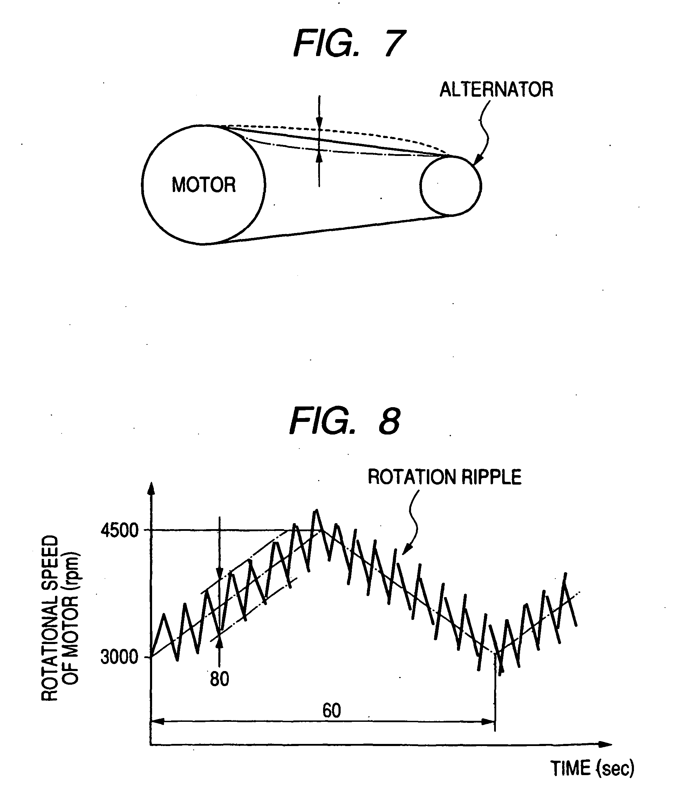

The inventors of the present invention have found that the phenomenon of brittle flaking can be reproduced via a rotational fluctuation test as illustrated in FIG. 7.

In the test, an automotive alternator was driven by a motor, which simulated a four-cylinder automotive engine, via a belt. The motor was so controlled to apply a rotation ripple that had an average rotational fluctuation rate of 2 % and a frequency being equal to two times of the rotational speed of the motor. For example, when the rotational speed of the motor was 600 rpm (i.e., 600/60 = 10 Hz), the frequency of the rotation ripple was 20 Hz. The change in rotational speed of the motor with time is shown in FIG. 8. Additionally, the belt tension was set to 300 to 500 N, which corresponds to the average belt tension of a belt drive system in an ordinary automobile.

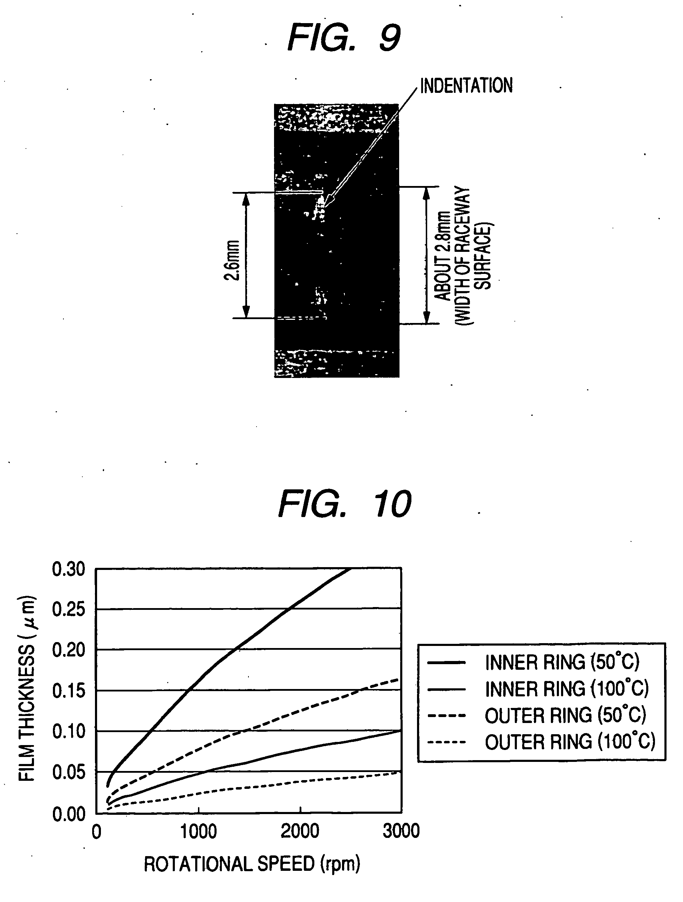

The inventors have further found that an indentation was formed through the test on a raceway surface of a rolling bearing of the alternator, as shown in FIG. 9. Since no load greater than the yield stress of the raceway surface was imposed thereon during the test, it was normally impossible to result in such an indentation. Accordingly, the inventors have hypothesized that a lubrication failure occurred during the test on the raceway surface, which further caused the indentation thereon.

According to Elastohydrodynamic Lubrication (EHL) theory, when there is a difference in rotational speed between a rolling element and the inner or outer ring of a rolling bearing, an elastohydrodynamic lubrication film will be developed between the surface of the rolling element and the raceway surface of the inner or outer ring, thereby preventing plastic deformation of the two members.

In normal operating conditions of the rolling bearing of the above-tested alternator, elastohydrodynamic lubrication films were formed between the surfaces of the rolling elements and the raceway surfaces of the inner and outer rings. Further, as shown in FIG. 10, the thickness of the elastohydrodynamic lubrication films increased with the rotational speed of the alternator (i.e., the rotational speed of the inner ring of the rolling bearing).

However, in certain abnormal operating conditions of the rolling bearing, for example, in a condition that the rolling elements have the same rotational speed as the inner or outer ring, the elastohydrodynamic lubrication films formed between the surfaces of the rolling elements and the raceway surface of the inner or outer ring would be broken down. Further, if one of the rolling elements collided against the inner or outer ring without the elastohydrodynamic lubrication film therebetween, the collision might result in a plastic deformation (i.e., an indentation) on the surface of the rolling element and/or the raceway surface of the inner or outer ring. The plastic deformation would further cause brittle flaking of the plastically-deformed surface.

Based on the above hypothesis, the inventors have considered that occurrence of brittle flaking in a rolling bearing can be prevented by avoiding plastic deformation of the rolling elements and inner and outer rings without elastohydrodynamic lubrication films between the rolling elements and the inner and outer rings.

Further, the inventors have considered that if the grease included in the rolling bearing has a sufficiently large withstand pressure, it will function as a cushion between the rolling elements and the inner and outer rings even when only very thin films thereof are developed which are much considerably thinner than normal elastohydrodynamic lubrication films. By means of the cushion effect, it will be possible to prevent plastic deformation of the rolling elements and inner and outer rings regardless of presence of elastohydrodynamic lubrication films between the rolling elements and the inner and outer rings. As a result, brittle flaking can be prevented from occurring in the rolling bearing.

It is, therefore, a primary object of the present invention to provide a rolling bearing for use in an automotive accessory, which has a capability to prevent the surfaces of rolling elements and the raceway surfaces of inner and outer rings thereof from brittle flaking.

According to the present invention, a rolling bearing for supporting a rotary shaft of an automotive accessory includes an inner ring, an outer ring, a plurality of rolling elements interposed between the inner and outer rings, and grease. The grease has a withstand pressure greater than a predetermined range in which plastic deformation of at least one of surfaces of the inner and outer rings and rolling elements occurs in absence of an elastohydrodynamic lubrication film of the grease on the surface.

With such a configuration, it becomes possible to reliably avoid plastic deformation of the inner and outer rings and rolling elements regardless of presence of elastohydrodynamic lubrication films between the inner and outer rings and the rolling elements. As a result, brittle flaking is reliably prevented from occurring in the rolling bearing.

It is preferable that in the rolling bearing, the withstand pressure of the grease is greater than three times of the maximum value of yield stresses of the inner and outer rings and rolling elements.

It is further preferable that in the rolling bearing, the withstand pressure of the grease is greater than or equal to 7500 MPa.

The rolling bearing is advantageous especially when the automotive accessory is driven by an automotive engine via a Poly-V belt.

The rolling bearing is advantageous especially when the automotive accessory is driven by an automotive engine in a serpentine belt drive system. The rolling bearing is further advantageous when the automotive engine drives four or more automotive accessories in the serpentine belt drive system.

The rolling bearing is advantageous especially when the automotive accessory is driven by an automotive engine in a belt drive system that includes an autotensioner.

The rolling bearing is advantageous especially when the rolling elements each have a ball shape.

The rolling bearing is advantageous especially when the automotive accessory has a speed increasing ratio of 2 to 3.5 with respect to an engine which drives the automotive accessory.

The rolling bearing is advantageous especially when the automotive accessory is an automotive alternator.


BRIEF DESCRIPTION OF THE DRAWINGS

The present invention will be understood more fully from the detailed description given hereinafter and from the accompanying drawings of the preferred embodiment of the invention, which, however, should not be taken to limit the invention to the specific embodiment but are for the purpose of explanation and understanding only.

In the accompanying drawings:

FIG. 1 is a perspective and partially broken-away view of a rolling bearing according to an embodiment of the invention;

FIG. 2 is a cross-sectional view of the rolling bearing of FIG. 1;

FIG. 3 is a partially cross-sectional view of an automotive alternator in which the rolling bearing of FIG. 1 is incorporated;

FIG. 4 is a schematic view of a serpentine belt drive system in which the automotive alternator of FIG. 3 is incorporated;

FIGS. 5A and 5B are schematic views illustrating a collision between a ball and the inner ring of a ball bearing;

FIGS. 6A and 6B are schematic views illustrating a plastic deformation due to the collision of FIGS. 5A and 5B;

FIG. 7 is a schematic view illustrating a rotational fluctuation test;

FIG. 8 is a graph showing a rotation ripple applied in the rotational fluctuation test of FIG. 7;

FIG. 9 is a picture showing a plastic deformation of a raceway surface of a rolling bearing by the rotational fluctuation test of FIG. 7; and

FIG. 10 is a graph showing the relationship between the thickness of elastohydrodynamic lubrication films formed between components of a rolling bearing and the rotational speed of a shaft supported by the rolling bearing.

## DESCRIPTION OF THE PREFERRED EMBODIMENT

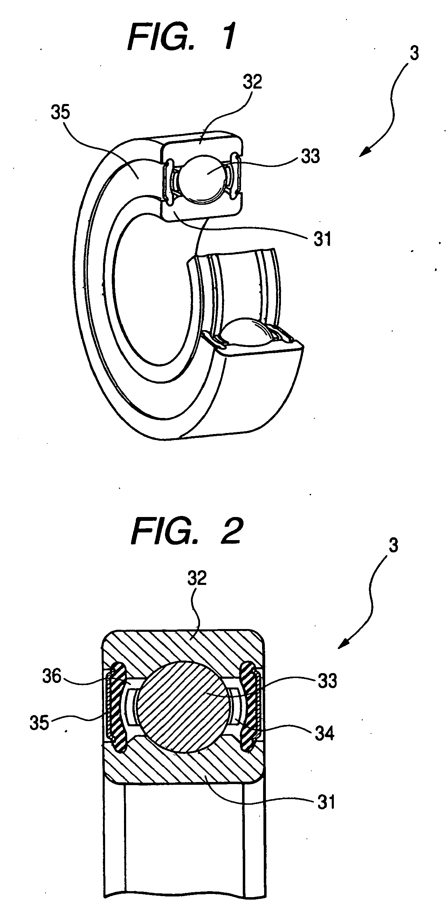

The preferred embodiment of the present invention will be described hereinafter with reference to FIGS. 1 - 6.

It should be noted that, for the sake of clarity and understanding, identical components having identical functions have been marked, where possible, with the same reference numerals in each of the figures.

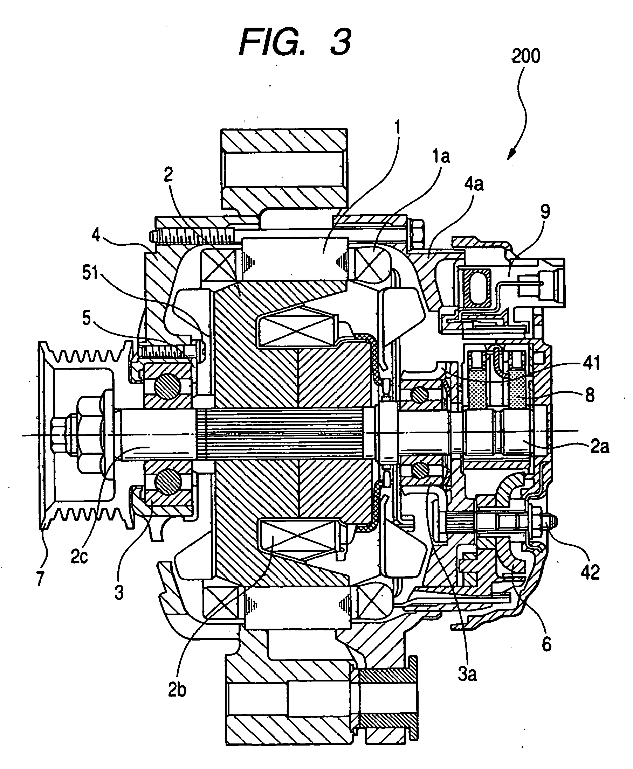

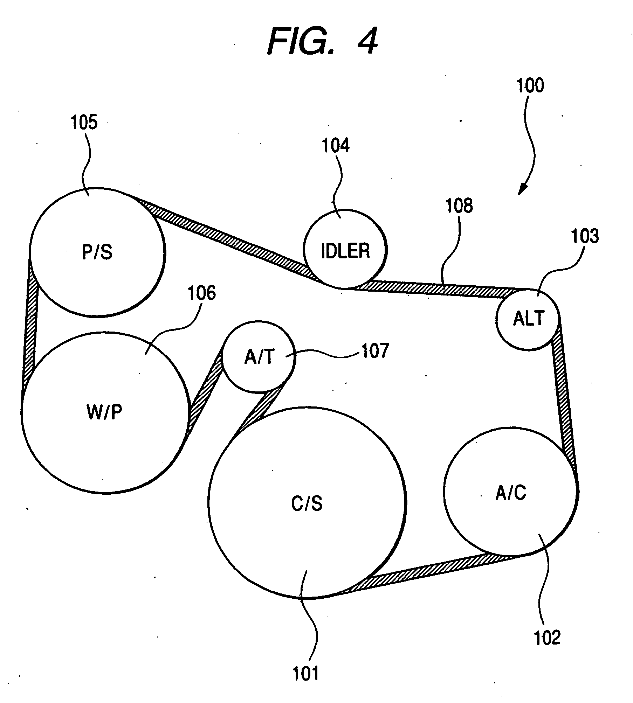

FIGS. 1 and 2 show the overall structure of a rolling bearing 3 according to an embodiment of the present invention. FIG. 3 shows the overall structure of an automotive alternator 200 in which the rolling bearing 3 is incorporated. FIG. 4 shows the overall configuration of a serpentine belt drive system 100 for an automobile, in which the alternator 200 is incorporated.

As shown in FIG. 4, in the serpentine belt drive system 100, an internal combustion engine drives six automotive accessories (or auxiliary machines) via a belt 108.

Specifically, in the serpentine belt drive system 100, a pulley 101 is mounted on a crank shaft (C/S) of the engine; a pulley 102 is mounted on a rotary shaft of an air conditioning compressor (A/C); a pulley 103 is mounted on a rotary shaft of the automotive alternator 200 (ALT); a pulley 104 is mounted on a rotary shaft of an idler (Idler); a pulley 105 is mounted on a rotary shaft of an oil pump for power steering (P/S); a pulley 106 is mounted on a rotary shaft of a water pump (W/P); and a pulley 107 is mounted on a rotary shaft of an autotensioner (A/T). The pulleys 101 - 107 are connected together via the belt 108, so that rotating power can be transmitted from the engine to the six accessories.

Each of the accessories has a given gear ratio with respect to the engine. For example, the diameter ratio between the pulley 101 of the engine and the pulley 103 of the automotive alternator 200 is set to 3.3, so that the automotive alternator 200 has a speed increasing ratio of 3.3 with respect to the engine. The belt 108 is a Poly-V belt with six grooves. The autotensioner is of torsion spring type and provided on the slack side of the pulley 101 of the engine. The belt tension on the slack side of the pulley 101 is kept constant by the autotensioner at, for example, 400 N.

Referring to FIG. 3, the automotive alternator 200 includes a stator 1, which includes a three-phase stator winding 1a, and a rotor 2 that includes a field winding 2b for creating a rotating magnetic field for the stator winding 1 a.

The rolling bearing 3 is provided on the front-side (i.e., the pulley-side) of the rotor 2. On the rear-side (i.e., the opposite side to the pulley) of the rotor 2, there is provided another rolling bearing 3a that has the same structure as the front-side rolling bearing 3. The rolling bearings 3 and 3a together support a shaft 2c of the rotor 2 (i.e., the rotary shaft of the automotive alternator 200).

A front-side housing 4 and a rear-side housing 4a are provided to accommodate the stator 1 and rotor 2. In addition, the stator 1 is supported by the front-side housing 4.

A plate-shaped bearing retainer 5 is fixed to the front-side housing 4 by means of a screw 51, thereby retaining the front-side rolling bearing 3. On the other hand, a hollow cylindrical bearing box 41 is provided which retains therein the rear-side rolling bearing 3a.

A knurled bolt 42 is provided to fix the bearing box 41 to the rear-side housing 4a.

A rectifier 6 is also fixed to the rear-side housing 4a via the knurled bolt 42. The rectifier 6 is electrically connected to the stator winding 1a and configured to convert a three-phase AC power outputted from the stator winding 1a to a DC power.

Brushes 8 and slip rings 2a together form an excitation mechanism by which field current is supplied to the field winding 2b while the rotor 2 is rotating.

A voltage regulator 9 is provided to regulate an output voltage of the automotive alternator 200 by controlling the field current supply to the field winding 2b.

Referring now to FIGS. 1 and 2, the rolling bearing 3 includes an inner ring 31, an outer ring 32, a plurality of rolling elements 33, a cage 34, a pair of seals 35, and grease 36.

The inner ring 31 has a minimum inner diameter of, for example, 17 mm. On the other hand, the outer ring 32 has a maximum outer diameter of, for example, 47 mm.

The rolling elements 33 are interposed between the inner and outer rings 31 and 32 and retained by the cage 34. In the present embodiment, the number of the rolling elements 33 is, for example, seven. Moreover, the rolling elements 33 each have a ball shape. In other words, the rolling bearing 3 comprises a ball bearing. The diameter of the rolling elements (i.e., the balls) 33 is, for example, 9 mm.

In addition, though the rear-side rolling bearing 3a has the same structure as the rolling bearing 3, it may have dimensions different from those of the rolling bearing 3. For example, in the rolling bearing 3a, the inner ring has a minimum inner diameter of 15 mm, the outer ring has a maximum outer diameter of 35mm, the rolling elements (i.e., the balls) has a diameter of 6 mm, and the number of the rolling elements is eight.

In the present embodiment, all the inner ring 31, outer ring 32, and rolling elements 33 are made, for example, of SUJ2 which is a kind of high carbon chromium steel.

The seals 35 are respectively provided at opposite axial ends of the rolling bearing 3. The seals 35 work to keep the grease 36, which is filled in the interior of the rolling bearing 3 as lubricant, from escaping out of the rolling bearing 3.

The grease 36 contains alkyl diphenyl ether as base oil which has a kinetic viscosity of, for example, 12 mm$^2$/s at high temperature, so as to secure sufficient lubrication in the rolling bearing 3. The grease 36 further contains at least one extreme pressure additive, so that it has a withstand pressure of, for example, 8000 MPa regardless of relative rotational speeds between the rolling elements 33 and the inner and outer rings 31 and 32.

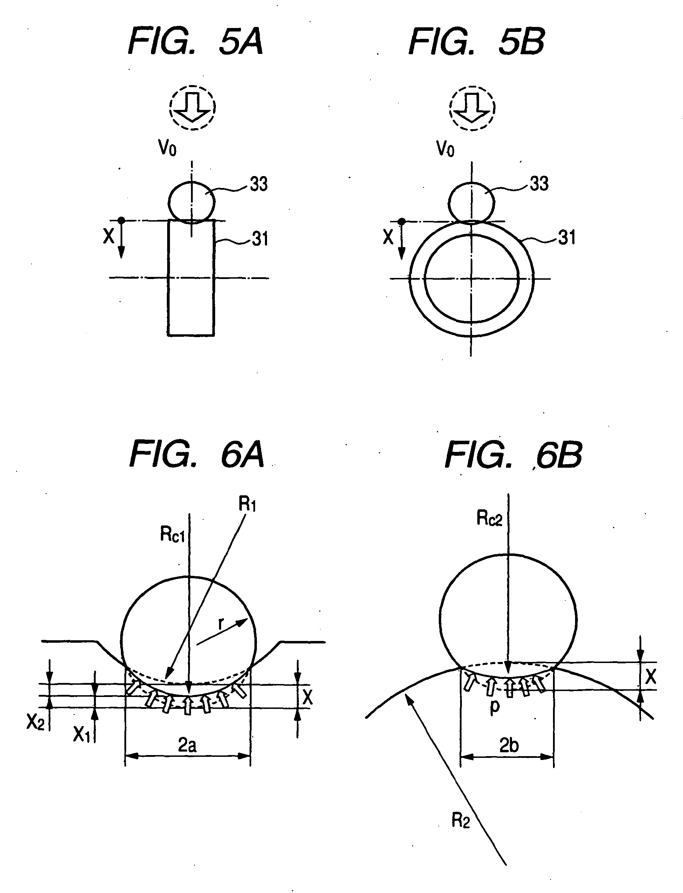

Having described the overall structure of the rolling bearing 3 according to the present embodiment, advantages thereof will be described with reference to FIGS. 5A - 6B.

FIGS. 5A and 5B illustrate a collision of one of the balls 33 (i.e., the rolling elements 33) against the inner ring 31 in the radial direction with an initial speed Vo.

Suppose that the ball 33 has the same rotational speed as the inner ring 31. Further, suppose that the withstand pressure of the grease 36 is not sufficiently large as described above. Then, there would be no elastohydrodynamic lubrication film between the ball 33 and the inner ring 31, and thus the collision would result in plastic deformation on the surface of the ball 33 and the raceway surface of the inner ring 31.

Let X represent the moving distance of the center of the ball 33 from an initial position thereof in the radial direction. The initial position of the center of the ball 33 here represents the position thereof at which the ball 33 makes first contact with the inner ring 31. Further, let m represent the mass of the moving body. For example, when the ball 33 collides against the inner ring 31 by itself, m represents the mass of the ball 33. Otherwise, when the ball 33 collides against the inner ring 31 along with the outer ring 32 and the alternator housings 4 and 4a, m represents the sum of the masses of the ball 33, outer ring 32, and alternator housings 4 and 4a.

Referring to FIGS. 6A and 6B, let $X_1$ represent the amount of plastic deformation of the ball 33 during the collision. Similarly, let $X_2$ represent the amount of plastic deformation of the inner ring 31 during the collision. Then, the total plastic deformation X of the two members is equal to $X_1 + X_2$.

Further, let r represent the radius of the ball 33; let $R_1$ represent the curvature radius of the raceway surface of the inner ring 31 before the collision; let $R_2$ represent the minimum radius of the raceway of the inner ring 31 before the collision; let a and b respectively represent the major and minor radiuses of the contact ellipse between the ball 33 and the inner ring 31 after the plastic deformation; let Rci and $R_{C2}$ respectively represent the curvature radiuses of the interface of the ball 33 and the inner ring 31 on first and second reference planes after the plastic deformation. Here, the first reference plane is, as shown in FIGS. 5A and 6A, defined to include thereon the axis of the inner ring 31 and the center of the ball 33. On the other hand, the second reference plane is, as shown in FIGS. 5B and 6B, defined to extend perpendicular to the axis of the inner ring 31 through the center of the ball 33.

Then, since the materials of the ball 33 and the inner ring 31 have substantially the same hardness, the parameters $X_1$, $X_2$, and X has the following relationship:

$$X_1 = X_2 = \frac{X}{2} \qquad\qquad (1)$$

Further, through an approximate computation based on the assumption that a is less than both r and $R_1$ and b is less than both r and $R_2$, the fowling geometric relationships can be obtained:

$$a^2 \cong \frac{2X}{\dfrac{1}{r} - \dfrac{1}{R_1}} \qquad (2A)$$

$$b^2 \cong \frac{2X}{\dfrac{1}{r} + \dfrac{1}{R_2}} \qquad (2B)$$

$$R_{c1} = \frac{2r R_1}{R_1 + r} \qquad (3A)$$

$$R_{c2} = \frac{2r R_2}{R_2 - r} \qquad (3B)$$

It should be noted that the above relationships can also be applicable to a collision of the ball 33 against the outer ring 32, through substituting $-R_2$ for $R_2$.

As can be seen from the above equations 2A - 3B, the contact ellipse (represented by a and b) and the interface (represented by Rci and $R_{C2}$) between the ball 33 and the inner ring 31 change with the total plastic deformation X.

The total plastic deformation X can be determined as follows. Let P represent the contact pressure at the interface between the inner ring 31 and the ball 33, then the force of restitution of the inner ring 31 is equal to P $\pi$ ab. Accordingly, the equation of motion for the moving body that has the mass m can be expressed as:

$$m\ddot{X} = -P\pi ab \qquad (4)$$

In addition, according to a research by Hutchings, the contact pressure P can be determined by the following equation:

$$P = C'Y \qquad (5),$$

Where, Y is the yield stress of the inner ring 31, and C' is a constant.

For a plastic deformation of a ball, the constant C' is about 3. In other cases, for example, in a research paper by Taper, the constant C' is about 2.8 regardless of the material of the plastically-deformed body.

Through incorporating the equations 2A and 2B into the equation 4, the equation of motion for the moving body can be rewritten as follows:

$$\ddot{X} = -\frac{2\pi r P}{m} \sqrt{\frac{R_1 R_2}{(R_1 - r)(R_2 + r)}} X \qquad (6)$$

The above equation 6 represents a simple harmonic motion. The solution of the equation 6 with the initial condition that $\ddot{X} = 0$ and $X = V_0$ when $t = 0$ can be expressed as:

$$X = \frac{V_0}{\omega_p} \sin \omega_p t \qquad (7),$$

where

$$\omega_p = \sqrt{\frac{2\pi r P}{m} \sqrt{\frac{R_1 R_2}{(R_1 - r)(R_2 + r)}}} \qquad (8)$$

The loading time tp, which is the time period from the start to finish of the collision, is one fourth of the frequency of the simple harmonic motion represented by the equation 6. Accordingly, the loading time tp can be expressed as:

$$t_p = \frac{\pi}{2\omega_p} \qquad (9)$$

Using the above-described equation 7, it is possible to determine the total plastic deformation X at any time instant t (0 < t < tp). Further, using the equations 2A and 2B, it is possible to determine the contact ellipse between the ball 33 and the inner ring 31 at that time instant. After the loading time tp, the ball 33 will rebound from the inner ring 31, as to which description is omitted here.

In a conventional rolling bearing of an automotive accessory, a collision of one of the rolling elements against the inner or outer ring in absence of an elastohydrodynamic lubrication film therebetween will result in a plastic deformation on the surface of the rolling bearing and/or the raceway surface of the inner or outer ring. Further, the plastic deformation will cause brittle flaking of the plastically-deformed surface.

However, when the grease used in a rolling bearing of an automotive accessory has a sufficiently large withstand pressure, such a plastic deformation can be prevented.

For example, for the rolling bearing 3 according to the present embodiment, the yield stress Y of the rolling elements 33 and inner and outer rings 31 and 32 is about 1600 MPa. Then, according to the equation 5, the contact pressure P at the interface between any two adjacent plastically-deformed members of the rolling bearing 3 is about 4800 MPa.

Accordingly, to prevent the plastic deformation, it is necessary for the grease 36 to have a withstand pressure greater than the contact pressure P of about 4800 MPa.

Further, if a safety factor of 1.5 is employed considering surface irregularities and nonuniformities in contact pressure distribution, it is desirable for the grease 36 to have a withstand pressure greater than or equal to 7500 MPa, so as to more reliably prevent the plastic deformation.

As described previously, in the present embodiment, the grease 36 has a withstand pressure of 8000 MPa, which is greater than 7500 MPa, regardless of relative rotational speeds between the rolling elements 33 and the inner and outer rings 31 and 32.

Accordingly, it is possible to reliably prevent plastic deformation of the rolling elements 33 and inner and outer rings 31 and 32 regardless of presence of elastohydrodynamic lubrication films between the rolling elements 33 and the inner and outer rings 31 and 32. As a result, brittle flaking is reliably prevented from occurring in the rolling bearing 3.

The rolling bearing 3 according to the present embodiment is advantageous especially in the following cases.

1) When employed in an automotive accessory, which has a large inertia and a large speed increasing ratio with respect to the engine driving it, such as the automotive alternator 200. The automotive accessory accordingly has a large equivalent inertia, so that it is easy for the automotive accessory to behave unstably. The unstable behavior of the automotive accessory may cause plastic deformation of the components of a rolling bearing employed therein, thereby giving rise to occurrence of brittle flaking in the rolling bearing.

2) When used in a serpentine belt drive system, such as the one shown in FIG. 4. In a serpentine belt drive system, a plurality of rotating machines are connected together via a single belt. Consequently, it is easy for rotation of the machines to become unstable. Moreover, the probability of occurrence of resonances among the machines and the belt is high. The rotational and vibrational instabilities in the serpentine belt drive system may cause plastic deformation of the components of a rolling bearing used therein, thereby giving rise to occurrence of brittle flaking in the rolling bearing. Especially, when the serpentine belt drive system includes five or more rotating machines, it is easier for brittle flaking to occur in the rolling bearing.

3) When used in a belt drive system that includes an autotensioner. The autotensioner generally works to keep the belt tension of the belt drive system constant. However, when an excessive transient variation occurs in the tension of the belt, the autotensioner may impose an impulsive load on the rotating machines of the belt drive system, thereby causing plastic deformation of the components of a rolling bearing employed in one of the rotating machines.

4) When used in a belt drive system in which a Poly-V belt is employed. With the Poly-V belt, the belt tension is generally set tight, thus imposing high load on the shafts of rotating machines of the belt drive system. The high load may cause plastic deformation of the components of a rolling bearing employed in one of the rotating machines, thereby giving rise to occurrence of brittle flaking in the rolling bearing.

5) When the rolling elements each have a ball shape as in the present embodiment. With the ball shape, the interfaces between the rolling elements and the inner and outer rings become smallest, thus increasing the probability of occurrence of collisions therebetween.

For example, in the previous embodiment, the rolling elements 33 each have a ball shape. However, the rolling elements 33 may have other shapes, such as a cylindrical shape.

Moreover, in the previous embodiment, the rolling elements 33 and inner and outer rings 31 and 32 are made of the same material and thus have the same yield stress. However, the rolling elements 33 and inner and outer rings 31 and 32 may also be made of different materials and thus have different yield stresses. In this case, the grease 36 may have a withstand pressure greater than three times of the maximum value of the yield stresses of the rolling elements 33 and inner and outer rings 31 and 32, so as to prevent plastic deformation of those members.

Furthermore, in the previous embodiment, the rolling bearing 3 is employed in the automotive alternator 200. However, the rolling bearing 3 may also be employed in any other automotive accessories, such as the air conditioning compressor.

Such modifications, changes, and improvements within the skill of the art are intended to be covered by the appended claims.

**Claims**

1.   A rolling bearing for supporting a rotary shaft of an automotive accessory, comprising:

an inner ring;
an outer ring;
a plurality of rolling elements interposed between the inner and outer ring; and
grease that has a withstand pressure greater than or equal to 7500 MPa, which is a predetermined range in which plastic deformation of at least one of surface of the inner and outer ring and rolling elements occurs in absence of an elastohydrodynamic lubrication film of the grease on the surface.

2.   The rolling bearing as set forth in Claim 1, wherein the withstand pressure of the grease is greater than three times of the maximum value of yield stresses of the inner and outer rings and rolling elements.

3.   The rolling bearing as set forth in Claim 1, wherein the automotive accessory is driven by an automotive engine via a Poly-V belt.

4.   The rolling bearing as set forth in Claim 1, wherein the automotive accessory is driven by an automotive engine in a serpentine belt drive system.

5.   The rolling bearing as set forth in Claim 4, wherein the automotive engine drives four or more automotive accessories in the serpentine belt drive system.

6.   The rolling bearing as set forth in Claim 1, wherein the automotive accessory is driven by an automotive engine in a belt drive system that includes an autotensioner.

7.   The rolling bearing as set forth in Claim 1, wherein the rolling elements each have a ball shape.

8.   The rolling bearing as set forth in Claim 1, wherein the automotive accessory has a speed increasing ratio of 2 to 3.5 with respect to an engine which drives the automotive accessory.

9.   The rolling bearing as set forth in Claim 1, wherein the automotive accessory is an automotive alternator.

**Patentansprüche**

1. Wälzlager zum Lagern einer Drehwelle eines Automobilzubehörs, aufweisend:

   einen Innenring
   einen Außenring;
   eine Mehrzahl von Wälzkörpern, die zwischen dem Innen- und dem Außenring angeordnet sind; und
   ein Schmierfett, das einen Haltedruck von größer oder gleich 7500 MPa aufweist, wobei es sich um einen vorbestimmten Bereich handelt, in dem eine plastische Verformung von zumindest entweder einer Oberfläche des Innenrings oder des Außenrings oder der Wälzkörper in Abwesenheit eines elastohydrodynamischen Schmierfilms aus dem Schmierfett auf der Oberfläche auftritt.

2. Wälzlager nach Anspruch 1, wobei der Haltedruck des Schmierfetts größer als dreimal der maximale Wert der Streckgrenze des Innen- oder Außenrings oder der Wälzkörper ist.

3. Wälzlager nach Anspruch 1, wobei das Automobilzubehör durch einen Automobilmotor über einen Rippenkeilriemen angetrieben wird.

4. Wälzlager nach Anspruch 1, wobei das Automobilzubehör durch einen Automobilmotor in einem Rippenkeilriemen-Antriebssystem angetrieben wird.

5. Wälzlager nach Anspruch 4, wobei der Automobilmotor vier oder mehr Automobilzubehöre in dem Rippenkeilriemen-Antriebssystem antreibt.

6. Wälzlager nach Anspruch 1, wobei das Automobilzubehör durch einen Automobilmotor in einem Riemenantriebssystem angetrieben wird, das einen Selbstspanner beinhaltet.

7. Wälzlager nach Anspruch 1, wobei die Wälzkörper jeweils eine Kugelform aufweisen.

8. Wälzlager nach Anspruch 1, wobei das Automobilzubehör in Bezug auf einen Motor, der das Automobilzubehör antreibt, ein Übersetzungsverhältnis von 2 bis 3,5 aufweist.

9. Wälzlager nach Anspruch 1, wobei es sich bei dem Automobilzubehör um einen Automobil-Wechselstromgenerator handelt.

**Revendications**

1. Roulement conçu pour soutenir un arbre rotatif d'un accessoire d'automobile, comprenant :

   une bague intérieure;
   une bague extérieure;
   plusieurs éléments de roulement interposés entre l'anneau interne et externe; et
   de la graisse qui a une pression de tenue supérieure ou égale à 7500 Mpa, qui est une gamme prédéterminée dans laquelle la déformation plastique d'au moins l'une d'une surface de la bague intérieure et extérieure et des éléments de roulement se produit en l'absence d'un film de lubrification élasto-hydrodynamique de la graisse sur la surface.

2. Roulement selon la revendication 1, dans lequel la pression de tenue de la graisse est supérieure à trois fois la valeur maximale des limites d'élasticité des bagues intérieures et extérieures et des éléments de roulement.

3. Roulement selon la revendication 1, dans lequel l'accessoire d'automobile est entraîné par un moteur d'automobile par le biais d'une courroie striée.

4. Roulement selon la revendication 1, dans lequel l'accessoire d'automobile est entraîné par un moteur d'automobile dans un système d'entraînement par courroie multifonction.

5. Roulement selon la revendication 4, dans lequel le moteur d'automobile entraîne quatre accessoires d'automobile ou plus dans le système d'entraînement par courroie multifonction.

6. Roulement selon la revendication 1, dans lequel l'accessoire d'automobile est entraîné par un moteur d'automobile dans un système d'entraînement par courroie qui comporte un auto-tendeur.

7. Roulement selon la revendication 1, dans lequel les éléments de roulement ont chacun une forme de bille.

8. Roulement selon la revendication 1, dans lequel l'accessoire d'automobile a un rapport d'accroissement de la vitesse de 2 à 3,5 par rapport à un moteur qui entraîne l'accessoire d'automobile.

9. Roulement selon la revendication 1, dans lequel l'accessoire d'automobile est un alternateur d'automobile.

# FIG. 1

35

32

33

3

31

# FIG. 2

32

3

36

33

35

34

31

EP 1 703 154 B1

# FIG. 3

# FIG. 4

FIG. 5A

FIG. 5B

FIG. 6A

FIG. 6B

*FIG. 7*

ALTERNATOR

MOTOR

*FIG. 8*

ROTATION RIPPLE

ROTATIONAL SPEED OF MOTOR (rpm)

4500

3000

80

60

TIME (sec)

## FIG. 9

INDENTATION

2.6mm

ABOUT 2.8mm
(WIDTH OF RACEWAY SURFACE)

## FIG. 10

FILM THICKNESS ($\mu$m)

ROTATIONAL SPEED (rpm)

—— INNER RING (50°C)
—— INNER RING (100°C)
---- OUTER RING (50°C)
---- OUTER RING (100°C)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• **K. TAMADA ; H. TANAKA.** Occurrence of Brittle Flaking on Bearings Used for Automotive Electrical Instruments and Auxiliary Devices. *Wear,* 1996, vol. 199, 245-252